Europäisches Patentamt

European Patent Office

Office européen des brevets

(19)

(11) Numéro de publication: **0 223 636**
**A1**

(12) # DEMANDE DE BREVET EUROPEEN

(21) Numéro de dépôt: **86402135.7**

(51) Int. Cl.⁴: **G 06 K 9/50**

(22) Date de dépôt: **30.09.86**

(30) Priorité: **30.09.85 FR 8514486**
**16.09.86 FR 8612917**

(43) Date de publication de la demande: **27.05.87**
**Bulletin 87/22**

(84) Etats contractants désignés: **AT BE CH DE GB IT LI LU NL SE**

(71) Demandeur: **JAY ELECTRONIOUE, Route de Chartreuse Corenc, F-38700 La Tronche (FR)**
Demandeur: **CENTRE NATIONAL DE LA RECHERCHE SCIENTIFIQUE (CNRS), 15, Quai Anatole France, F-75007 Paris (FR)**

(72) Inventeur: **Nougaret, Marcel Alexandre, 14 rue du Grand Duc, Seyssins (FR)**
Inventeur: **Hereson, Franck Daniel, 6 rue Billerey, Grenoble (FR)**

(74) Mandataire: **Herrburger, Pierre, Cabinet Pierre Herrburger 115, boulevard Haussmann, F-75008 Paris (FR)**

(54) **Dispositif de reconnaissance de la forme d'un objet.**

(57) Le dispositif comporte des moyens pour entraîner en rotation le faisceau optique (5) afin que, lors du passage d'un objet à reconnaître (15), le faisceau soit interrompu à chaque rotation, sur une partie au moins de la trajectoire du faisceau optique ($5_1$), des moyens pour produire un signal référençant une origine de la rotation de ce faisceau, un ensemble électronique recevant le signal de référence et un signal fonction de la durée d'interruption du faisceau ($5_1$) par l'objet, cet ensemble produisant un couple de valeur significatif de l'objet à reconnaître, une mémoire pour recevoir initialement un ensemble de ces couples de valeur d'un objet à reconnaître et servant de référence, un comparateur inclus dans l'ensemble électronique et comparant les couples de valeur mis initialement en mémoire et les couples de valeurs mesurées sur un objet à reconnaître.

EP 0 223 636 A1

DUPLICATA

1

" Dispositif de reconnaissance de la forme d'un objet ".

L'invention concerne un dispositif de reconnaissance de la forme d'un objet.

Les dispositifs de reconnaissance de formes actuellement connus sont très souvent basés sur l'association d'une caméra (vidéo ou à transfert de charges) et d'un outil de traitement de l'information souvent sophistiqué. L'association de ces deux éléments et des prestations annexes indispensables à leur mise en oeuvre, aboutit à un montant d'investissement très élevé.

Ces dispositifs sont souvent beaucoup trop performants pour des applications plus élémentaires de tri, de reconnaissance de défauts ou autres. De plus, l'utilisation de caméras en milieu industriel n'est pas toujours bien ressentie par les responsables d'entreprise ; elles posent des problèmes qui ne sont pas toujours simples à résoudre (éclairement, positionnement des objets à re- connaître, ...).

En résumé, les dispositifs actuellement proposés peuvent solutionner des  problèmes de reconnaissance complexes (objets en vrac, partiellement dissimulés, ...) mais sont trop onéreux et trop complexes pour des applications simples.

La présente invention a notamment pour but de remédier à ces inconvénients et concerne à cet effet un dispositif de reconnaissance de la forme d'un objet comprenant, un moyen émetteur d'un faisceau optique et un moyen récepteur de ce faisceau optique, entre lesquels se déplace l'objet à reconnaître, qui doit interrompre le faisceau optique, dispositif caractérisé en ce qu'il comporte des moyens pour entraîner en rotation le faisceau optique afin que, lors du passage d'un objet à reconnaître, ce faisceau soit interrompu, à chaque rotation complète, sur une partie au moins de la trajectoire du faisceau optique, des moyens pour produire, à chaque rotation du faisceau, un signal référençant une origine de la rotation de ce faisceau, un ensemble électronique recevant le signal de référence et un signal fonction de la durée d'interruption du faisceau par l'objet, cet ensemble produisant, pour chaque rotation du faisceau interrompu par un objet, un couple de valeur significatif de l'objet à reconnaître, une mémoire pour recevoir initialement un ensemble de ces couples de valeur d'un objet à reconnaître et servant de référence, un comparateur inclus dans l'ensemble électronique et comparant les couples de valeur mis initialement en mémoire et les couples de valeur mesurés sur un objet à reconnaître, un moyen pour mettre en évidence la concordance et/ou la discordance des couples de valeur mis initialement en mémoire et des couples de valeur mesurés sur un objet à reconnaître.

Suivant une autre caractéristique de l'invention, les moyens pour entraîner en rotation le faisceau sont prévus sur le moyen émetteur du faisceau, tandis que le moyen récepteur du faisceau comporte un miroir à section circulaire recevant le faisceau tournant et le renvoyant sur un dispositif sensible au flux lumineux disposé suivant l'axe X-X du miroir à section circulaire, cet axe étant confondu avec l'axe de rotation du faisceau du moyen émetteur.

Suivant une autre caractéristique de l'invention, le miroir à section circulaire est un

3

miroir tronconique et un élément conique collecteur du flux lumineux est prévu suivant l'axe X-X du miroir tronconique afin de recevoir le flux lumineux dévié par le miroir tronconique et le diriger sur le moyen sensible au flux lumineux.

Suivant une autre caractéristique de l'invention, le moyen émetteur comporte un support tournant pourvu d'un premier moyen réflecteur axial recevant le faisceau lumineux émis par une source et renvoyant ce faisceau vers un second réflecteur disposé à la périphérie du support, ce second réflecteur produisant un faisceau mobile en translation suivant une trajectoire circulaire dirigée vers le miroir à section circulaire du moyen récepteur.

Suivant une autre caractéristique de l'invention, le moyen produisant, à chaque rotation du faisceau, le signal référençant l'origine de la rotation, est situé de manière à produire ce signal lorsque le faisceau optique tournant se trouve au point haut de sa trajectoire.

L'invention est représentée à titre d'exemples non limitatifs sur les dessins ci-joints, dans lesquels :

- la figure 1 est une vue en coupe transversale de la partie mécanique et optique du dispositif conforme à l'invention,

- la figure 2 est une vue en coupe transversale du boîtier contenant l'ensemble électronique de gestion du dispositif,

- la figure 3 est une vue latérale schématique illustrant le principe de fonctionnement du dispositif,

- la figure 4 est un diagramme temporel des signaux mis en oeuvre suivant l'invention,

- la figure 5 est le schéma synopti-

0223636

4

que de l'ensemble électronique du dispositif de l'invention,

- la figure 6 est une vue en coupe longitudinale du dispositif émetteur,

- la figure 7 est une coupe suivant A-A de la figure 1,

- la figure 8 est une coupe suivant B-B de la figure 1,

- la figure 9 est une coupe longitudinale du dispositif récepteur ;

- la figure 10 est une vue de gauche de la figure 9, le couvercle ayant été enlevé.

Le dispositif conforme à l'invention a, en conséquence, pour but de permettre d'une manière simple et peu onéreuse, la reconnaissance de la forme d'un objet, afin de vérifier sa conformité avec un objet de référence.

Ce dispositif met en oeuvre un barrage optique mobile qui est interrompu par l'objet à reconnaître, afin que l'instant de cette interruption et la durée de cette interruption, permettent de déterminer à un moment donné et donc pour une position donnée de l'objet, un couple de valeur significative de l'objet examiné.

Plusieurs couples de valeurs pourront être établis pour des positions successives de l'objet, au cours de son déplacement dans le champ du faisceau, de façon que ces couples de valeurs soient significatives de la forme de l'objet examiné et permettent de le reconnaître par comparaison de ces couples de valeurs avec des couples de valeurs produit par le passage d'un objet de référence dans le barrage mobile, ces couples de valeurs étant préalablement mémorisés dans un système logique programmé.

Bien entendu, ce dispositif pourra

5

permettre la reconnaissance de plusieurs formes différentes, le nombre de formes reconnaissables étant fonction de la capacité de la mémoire du système de traitement mis en oeuvre.

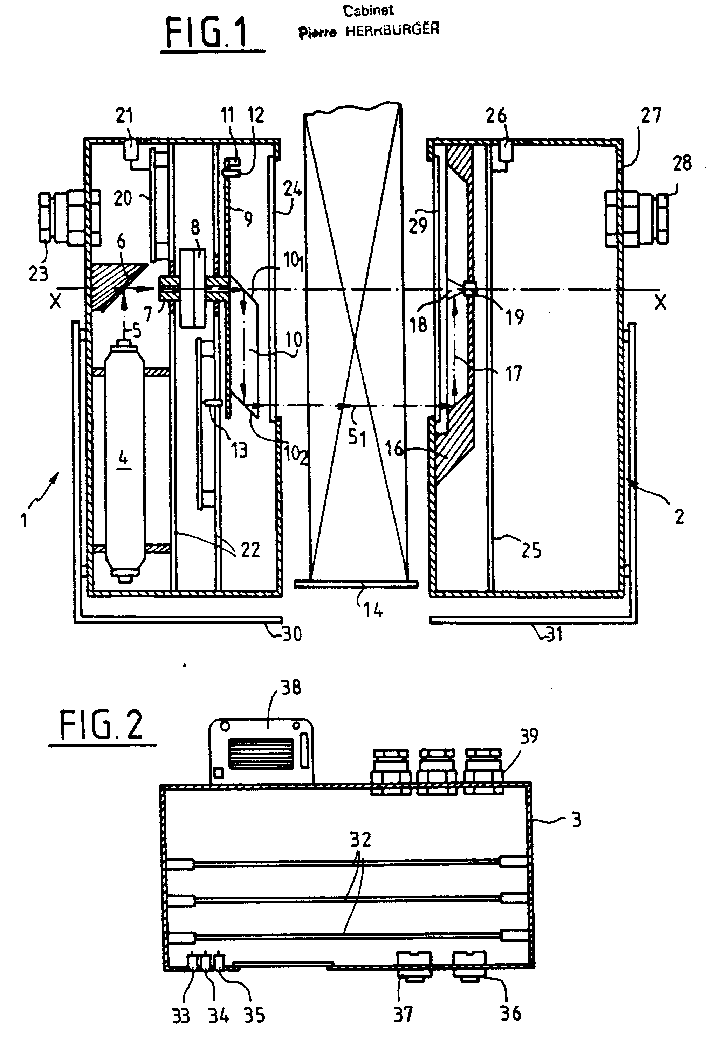

Le dispositif conforme à l'invention comprend un boîtier 1 émetteur du faisceau optique, un boîtier 2 récepteur de ce faisceau (voir figure 1), et un boîtier 3 contenant l'ensemble électronique de gestion.

Le boîtier émetteur 1 comprend une source lumineuse 4 produisant le faisceau lumineux 5 qui, après réflexion sur un miroir 6, est dirigé suivant l'axe optique X-X. Ce faisceau optique 5 passe alors au travers de l'arbre creux 7 d'un moteur électrique 8 à vitesse constante, l'axe de cet arbre 7 étant confondu avec l'axe X-X. L'arbre 7 du moteur supporte un disque 9 qui est pourvu d'un prisme 10 présentant deux faces parallèles opposées $10_1$ et $10_2$. La face $10_1$ étant sécante de l'axe X-X, alors que la face $10_2$ est située à la périphérie du disque 9.

Le disque de support 9 entraîné en rotation est également pourvu d'un contrepoids 11 équilibrant le poids du prisme 10, ainsi que d'un aimant 12 engendrant une impulsion électrique dans une bobine 13 fixée à l'intérieur du boîtier.

Comme cela sera expliqué ci-après, cette bobine 13 est destinée à produire une impulsion constituant une référence d'origine pour le faisceau optique mobile.

Ce faisceau optique réfléchi par la face $10_2$ du prisme 10 effectue un mouvement de translation circulaire autour de l'axe X-X et est reçu par le boîtier 2 situé à l'opposé de la bande transporteuse 14 sur laquelle se déplacent les objets 15 à reconnaître. Ce boîtier 2 est pourvu d'une pièce 16 présentant une face tronconique réfléchissante 17 dont le diamètre moyen est tel

6

qu'elle reçoit le faisceau optique $5_1$ animé du mouvement de translation circulaire autour de l'axe X-X. Cette surface tronconique 17 présente également un axe qui est confondu avec l'axe X-X et est réalisée de manière à réfléchir le faisceau $5_1$ vers un élément conique 18 situé sur l'axe X-X et dont le sommet est adjacent d'une cellule 19 sensible au flux lumineux émis par la source 4.

Dans le boîtier 1, on remarque également la présence de circuits imprimés 20 supportant les composants électroniques et les alimentations électriques (non représentés) du moteur 8 et de la source lumineuse 4 ; un voyant 21 signalant le bon fonctionnement de l'ensemble du boîtier émetteur 1 ; une structure interne 22 supportant l'ensemble des composants ; un presse-étoupe 23 pour le passage des différents câbles d'alimentation et de communication avec le boîtier de gestion 3 (figure 2), une face avant transparente 24 traversée par le faisceau optique $5_1$ effectuant son mouvement circulaire. Egalement, le boîtier de réception 2 comporte un circuit imprimé 25 supportant les composants électroniques de traitement de l'information électrique transmise par le dispositif 19 sensible au flux lumineux ; un voyant 26 signalant le bon fonctionnement de l'ensemble récepteur ainsi que l'état du dispositif sensible au flux lumineux 19 ; un bouchon 27 permettant l'accès aux dispositifs de réglage des composants du circuit imprimé ; un presse-étoupe 28 pour le passage des différents câbles d'alimentation et de communication avec le boîtier de gestion 3 et une face avant transparente 29.

Les boîtiers d'émission 1 et de réception 2 sont équipés d'un équerre de fixation, respectivement 30 et 31. Ces équerres sont munies d'un dispositif mécanique de réglages des boîtiers en hauteur, en site et en azimuts. Ces réglages sont destinés à positionner le capteur de telle façon que le faisceau optique soit

7

interrompu par les parties les plus représentatives de l'objet 15 en déplacement rectiligne. Les réglages en site et en azimuts sont destinés à assurer le parallélisme des parties optiques des boîtiers d'émission et de réception suivant l'axe X-X.

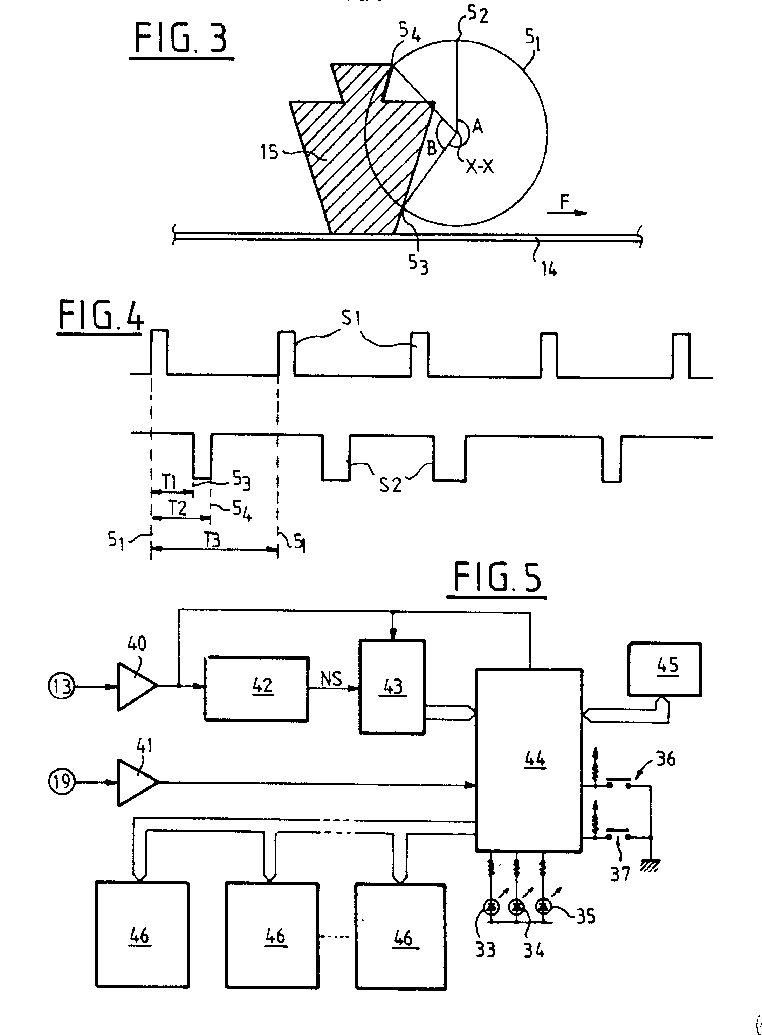

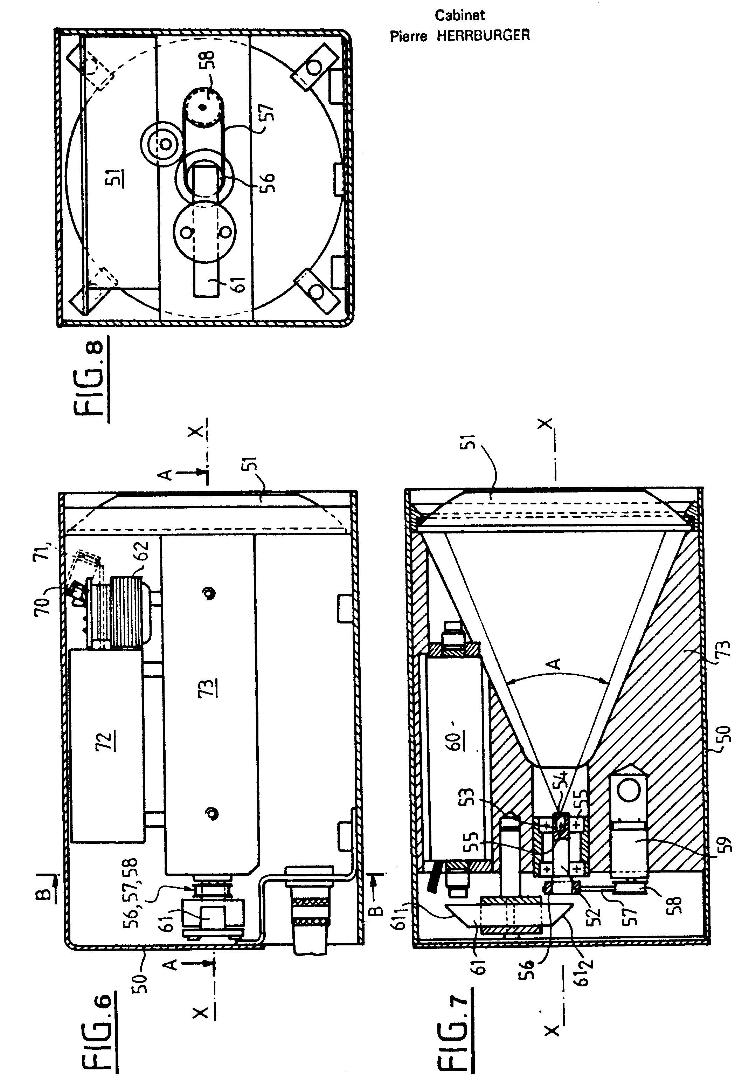

Le boîtier de gestion 3 représenté sur la figure 3, comprend une structure mécanique et électrique destinée à recevoir des circuits imprimés 32 supportant les composants électroniques de gestion du dispositif représenté sur la figure 5. Le nombre de ces circuits imprimés 29 peut varier en fonction du nombre des couples de valeurs qui doivent être mémorisées et en fonction du type d'informations qui seront transmises aux organes extérieurs de traitement (automates programmables, ordinateurs industriels ou autres).

Ce boîtier comporte également un voyant 33 indiquant que le boîtier de gestion 3 fonctionne correctement, un voyant 34 reflétant l'état du voyant 26 du boîtier de réception 2 et donc l'état du dispositif 19 sensible au flux lumineux ; un voyant 35 reflétant l'état transmis par la bobine 13 du boîtier d'émission 1 et attestant donc que le dispositif monté à rotation 8 est bien opérationnel ; un bouton-poussoir 36 permettant de réinitialiser le dispositif de gestion ; un bouton-poussoir 37 destiné à signaler au dispositif électronique de gestion que celui-ci doit se mettre en mode de mémorisation des couples de valeurs produits par un objet de référence défilant devant le dispositif ; un dispositif 38 de communication avec l'organe extérieur de traitement ; des presse-étoupes 39 pour le passage des câbles d'alimentation et de communication avec les boîtiers d'émission 1 et de réception 2.

Le fonctionnement du dispositif de l'invention est le suivant et est illustré par la figure 3.

8

L'aimant 12 est situé à l'opposé de la surface $10_2$ du prisme et la bobine 13 produisant un signal électrique est située en position basse de la trajectoire du faisceau. Le dispositif électronique de gestion disposé dans le boîtier 3 reçoit donc un signal électrique lorsque le faisceau optique $5_1$ animé du mouvement de rotation, est situé en position haute, en $5_2$.

l'objet 15 à reconnaître se déplace avec le transporteur 14 dans le sens de la flèche F et occulte le faisceau optique $5_1$ lorsque celui-ci arrive dans la position $5_3$ et a tourné d'un angle A à partir du point $5_2$ pris comme référence d'origine du mouvement circulaire du faisceau optique $5_1$. Le faisceau reste occulté par l'objet 15 jusqu'à ce qu'il ait atteint la position $5_4$ et l'angle B représente l'angle pendant lequel le faisceau tournant est interrompu par l'objet 15.

A chaque tour complet du faisceau optique, le dispositif mesure donc un couple de valeurs fonction de A et de B et tant qu'une partie de l'objet 15 est présente dans le champ parcouru dans le faisceau mobile, le dispositif réalise l'acquisition de couples de valeurs fonction de A et B, l'ensemble de ces couples permettant la reconnaissance de l'objet 15 par comparaison avec des couples de valeurs de référence précédemment mis en mémoire.

Le fonctionnement de la partie électronique du dispositif est le suivant (voir figure 4).

Le signal $S_1$ est un signal qui est mis en forme à partir de l'information délivrée par la bobine 13, c'est-à-dire alors que le faisceau optique $5_1$ est dans la position $5_2$. La fréquence des signaux $S_1$ est donc représentative de la vitesse de rotation, par ailleurs constante, du moteur 8. Ce signal est périodique, de période T et ce temps T correspond à une rotation d'un tour du faisceau optique, soit 360°.

9

Le signal $S_2$ est un signal mis en forme à partir de l'information délivrée par le dispositif 19 sensible au flux lumineux. Le front descendant de ce signal correspond à l'occultation du faisceau en $5_3$, le front montant correspond à la fin de l'occultation du faisceau en $5_4$.

La valeur de l'angle A est donc :

$$A = \frac{T_1}{T} \times 360°$$

et la valeur de l'angle B est :

$$B = \frac{T_2 - T_1}{T} \times 360°$$

Le traitement de ces signaux est assuré suivant le schéma synoptique de la figure 5.

Le signal issu de la bobine 13 est amené dans le circuit de mise en forme 40 et produit en sortie le signal $S_1$.

Le signal issu du dispositif 19 sensible au flux lumineux est amené au circuit de mise en forme 41 et produit à sa sortie le signal $S_2$.

Le signal $S_1$ est amené à un dispositif à verrouillage de phase 42 qui délivre un signal NS dont la fréquence est N fois supérieure à celle du signal $S_1$. Ce dispositif 42 délivre donc une impulsion pour chaque déplacement considéré comme élémentaire du dispositif monté à rotation 7, 8, 9, 10.

Un compteur électronique 43 reçoit les impulsions issues du dispositif 42 et la valeur numérique de ce compteur s'incrémente pour chaque impulsion reçue. Ce compteur 43 est remis à zéro à chaque début de tour par le signal $S_1$.

Le dispositif de traitement informatique 44 dont la fonction est de gérer l'ensemble du dis-

10

positif de reconnaissance de formes par faisceau mobile interrompu, scrute en permanence l'état du signal $S_2$. Dès que celui-ci passe de l'état haut à l'état bas (début de l'occultation de l'objet au point $5_3$ sur les figures 3 et 4), le dispositif acquiert la donnée numérique disponible en sortie du compteur 43 et qui correspond à la valeur $T_1$ (ou à l'angle A sur la figure 3). Dès que le signal $S_2$ repasse à l'état haut (point $5_4$), on obtient la valeur de $T_2$ qui correspond à la somme des angles A et B.

Ces deux mesures $T_1$ et $T_2$ correspondent à un couple de valeurs significatives de l'objet à reconnaître et ces couples de valeurs sont relevés à chaque cycle de rotation du faisceau 5, dès que l'objet apparaît dans le champ balayé par le faisceau mobile $5_1$ et jusqu'à ce que cet objet ait disparu du champ et ne coupe plus le faisceau tournant.

L'ensemble de ces couples de mesures est mémorisé dans une mémoire électronique interne au dispositif de traitement 44.

Par ailleurs, une mémoire électronique non volatile 45 contient le ou les couples de valeur du ou des objets à reconnaître, ces couples de valeurs étant acquis lors d'une phase préalable d'apprentissage. Dès que cette acquisition de signature est terminée, le dispositif informatique 44 compare les données qui viennent d'être acquises avec celles contenues dans la mémoire 45. S'il y a concordance ou non de l'ensemble ou d'une partie seulement des couples de valeurs relevées, le dispositif 44 en informe l'utilisateur par un ou plusieurs moyens de transmission de données 46 qui sont à choisir parmi un ensemble d'options disponibles.

Le bouton-poussoir 36 associé au dispositif de traitement 44 est destiné à permettre à l'utilisateur de remettre ce dispositif de traitement dans une configuration initiale équivalente à celle obte-

11

nue à la mise sous tension. Le bouton-poussoir 37, par contre, permet à l'utilisateur de signaler au dispositif de traitement informatique 44, qu'il doit se remettre en mode apprentissage, c'est-à-dire que le prochain objet qui va apparaître dans le champ balayé par le faisceau mobile, est un nouvel objet dont on n'a pas encore repéré la forme. Le dispositif informatique 44 s'attend alors à voir passer dans le champ balayé par le faisceau optique $5_1$ le même objet un certain nombre de fois (par exemple 10 passages). Ces passages permettent de réaliser l'acquisition successive d'un nombre important de couples de valeurs significatives d'un même objet à reconnaître et de mémoriser ces couples de valeur dans la mémoire interne au dispositif 44. Après acquisition de ces couples de valeurs, le dispositif informatique 44 exécute le traitement numérique sur ces données avant de transférer les données relatives aux couples de valeurs de ce nouvel objet dans la mémoire non volatile 45.

Les différentes options schématisées en 46 du dispositif de transmission de données, sont implantées sur les circuits imprimés 32 du boîtier de gestion 3 où elles peuvent être ajoutées au gré de l'utilisateur. Ces différentes options peuvent être de type électromagnétique (un relais par objet à reconnaître par exemple), de type informatique (liaison série, parallèle ou autre) ou tout simplement, du type à communication d'informations (affichage sur un moyen d'affichage quelconque, moniteur vidéo, etc.).

Le mode de réalisation représenté sur les figures 6 à 10 aboutit à un dispositif de reconnaissance de la forme d'un objet, qui est de construction particulièrement simple et de fonctionnement sûr dans la mesure où il comprend un maximum de pièces statiques. Ce dispositif présente également l'avantage d'être d'un faible encombrement.

12

L'émetteur comprend un boîtier 50 dont la face avant est occupée par une lentille circulaire sphérique tronquée 51, dans l'axe de laquelle est disposé un support tournant 52 supportant un prisme 53 dont la face avant inclinée 54 est située au foyer de la lentille 51.

Le support 52 est monté en rotation par l'intermédiaire de roulements à billes 55 et comporte, à son extrémité arrière, une poulie 56 sur laquelle passe une courroie sans fin 57 entraînée en rotation par la poulie 58 d'un moteur électrique 59.

Ce support 52 est réalisé en un matériau transparent ou comporte un axe creux afin de pouvoir être traversé par le faisceau laser issu d'un générateur de faisceau laser 60. Ce faisceau laser vient frapper les deux faces inclinées à 45° $61_1$ et $61_2$ d'un double prisme 61 fixé à l'intérieur du boîtier afin de renvoyer le faisceau laser issu du générateur 60 dans une direction, parallèle, opposée, confondue avec l'axe de rotation du support 52 et avec l'axe de la lentille 51.

On constate donc, avec ce dispositif, que le faisceau laser issu du générateur 60 subit une double déviation par le prisme 61, traverse le support 52, puis le prisme tournant 53 afin que le faisceau laser émergeant de la face inclinée 54 décrive une trajectoire circulaire dont l'angle au sommet est A. Ce faisceau vient frapper la lentille 51 pour former un faisceau tournant parallèlement à lui-même, et qui est susceptible d'être partiellement coupé par l'objet dont on doit reconnaître la forme.

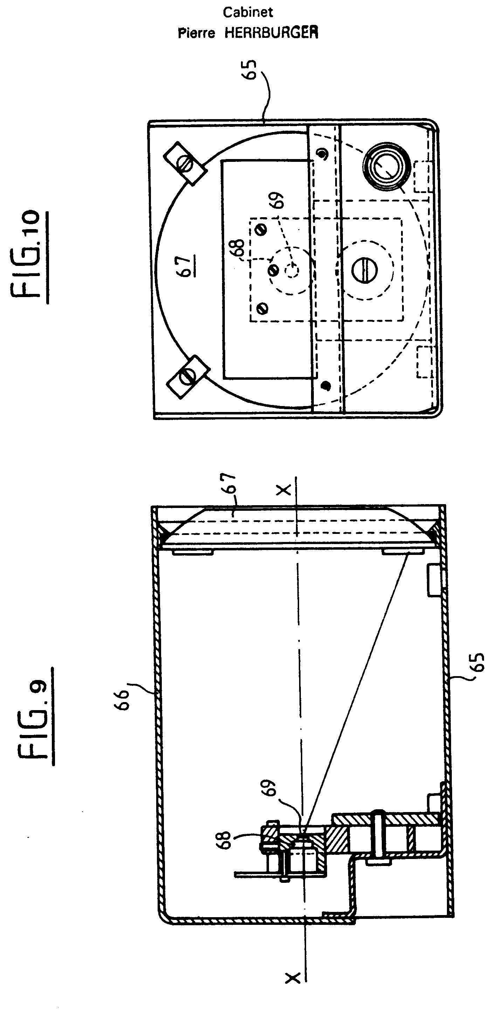

Le récepteur (voir figures 9 et 10), disposé en regard de l'émetteur, comprend un boîtier 65 pourvu d'un couvercle 66 et dont la face avant est occupée par une lentille sphérique tronquée 67 disposée dans l'axe et en regard de la lentille 51. A l'intérieur de ce boîtier

13

est positionné un support 68 qui comporte une photodiode 69 située, suivant l'axe X-X de l'ensemble, au foyer optique de la lentille 67.

Ainsi par ce dispositif, le faisceau laser tournant, issu de la lentille 51, est reçu par la lentille 67 qui fait converger ce faisceau vers la photodiode 69 de façon à produire un signal électrique pendant tout le temps où le faisceau laser tournant entre les deux lentilles 51, 67 n'est pas occulté par l'objet dont on doit reconnaître la forme. La durée de cette occultation correspond à un signal $S_2$ qui est donc produit à chaque rotation du faisceau tant qu'un objet à reconnaître est situé dans cette trajectoire circulaire.

Le dispositif émetteur comporte également une diode 70 associée à une lentille 71, l'axe de cet ensemble diode 70 et lentille 71 étant dirigé vers l'impact du faisceau tournant issu du prisme 53 sur la lentille 51 afin de capter, à chaque passage du faisceau tournant, l'émission parasite du faisceau laser qui est réfléchi par la face interne de la lentille 51.

Ainsi en un point déterminé de la rotation du faisceeau laser, on produit un signal $S_1$ de façon que, à chaque rotation, un ensemble électronique disposé dans le boîtier 72, compare les couples de valeur $S_1$, $S_2$, produits lors de la reconnaissance d'un objet, avec ceux mis préalablement en mémoire pour un objet déterminé afin que cet ensemble électronique 72 mette en évidence la concordance ou la discordance des couples de valeurs mis initialement en mémoire et les couples de valeurs mesurés sur un objet à reconnaître.

On remarquera que ce dispositif, qui est de construction simple, est d'un fonctionnement sûr insensible aux vibrations étant donné que la seule pièce rotative est constituée par le support 52 qui est d'un faible poids et qui est symétrique par rapport à

14

l'axe X-X. Cette pièce est supportée rigidement, par l'intermédiaire des roulements 55, dans le bloc 73, logé à l'intérieur du boîtier 50, qui supporte également le moteur 59, le générateur de faisceau laser 60 et le prisme double 61.

15

<u>R E V E N D I C A T I O N S</u>

1°) Dispositif de reconnaissance de la forme d'un objet comprenant, un moyen émetteur d'un faisceau optique et un moyen récepteur de ce faisceau optique, entre lesquels se déplace l'objet à reconnaître, qui doit interrompre le faisceau optique, dispositif caractérisé en ce qu'il comporte des moyens (7, 8, 9, 10) pour entraîner en rotation le faisceau optique (5) afin que, lors du passage d'un objet à reconnaître, le faisceau soit interrompu à chaque rotation sur une partie au moins de la trajectoire du faisceau optique ($5_1$), des moyens (11, 13) pour produire, à chaque rotation du faisceau, un signal ($S_1$) référençant une origine de la rotation de ce faisceau, un ensemble électronique (42, 43, 44, 45) recevant le signal de référence ($S_1$) et un signal ($S_2$) fonction de la durée d'interruption du faisceau ($5_1$) par l'objet, cet ensemble produisant pour chaque rotation du faisceau ($5_1$) interrompu par un objet, un couple de valeur significatif de l'objet à reconnaître, une mémoire (45) pour recevoir initialement un ensemble de ces couples de valeur d'un objet à reconnaître et servant de référence, un comparateur inclus dans l'ensemble électronique (44) et comparant les couples de valeur mis initialement en mémoire et les couples de valeur mesurés sur un objet à reconnaître, un moyen (46) pour mettre en évidence la concordance et/ou la discordance des couples de valeur mis initialement en mémoire et des couples de valeurs mesurés sur un objet à reconnaître.

2°) Dispositif conforme à la revendication 1, caractérisé en ce que les moyens pour entraîner en rotation le faisceau sont prévus sur le moyen (1) émetteur du faisceau, tandis que le moyen (2) récepteur du faisceau comporte un miroir à section circulaire (17) recevant le faisceau tournant ($5_1$) le renvoyant sur un dispositif (19) sensible au flux lumineux disposé suivant

16

l'axe (X-X) du miroir à section circulaire, cet axe (X-X) étant confondu avec l'axe de rotation du faisceau ($5_1$) du moyen émetteur (1).

3°) Dispositif conforme à la revendication 2, caractérisé en ce que le miroir à section circulaire (17) est un miroir tronconique et un élément conique (18), collecteur du flux lumineux, est prévu suivant l'axe (X-X) du miroir tronconique afin de recevoir le flux lumineux dévié par le miroir tronconique et le diriger sur le moyen (19) sensible au flux lumineux.

4°) Dispositif conforme à la revendication 2, caractérisé en ce que le moyen émetteur comporte un support tournant (9) pourvu d'un premier moyen réflecteur axial ($10_1$) recevant le faisceau lumineux émis par une source (4) et renvoyant ce faisceau vers un second réflecteur ($10_2$) disposé à la périphérie du support (9), ce second réflecteur produisant un faisceau ($5_1$) mobile en translation suivant une trajectoire circulaire dirigée vers le miroir à section circulaire (17) du moyen récepteur.

5°) Dispositif conforme à la revendication 4, caractérisé en ce que les premier et second réflecteurs ($10_1$, $10_2$) sont constitués par les faces parallèles opposées d'un prisme (10).

6°) Dispositif conforme à la revendication 2, caractérisé en ce que les moyens pour entraîner en rotation le support tournant (9) du moyen émetteur (1) sont constitués par un moteur électrique (8) à arbre creux (7), cet arbre creux servant de passage au faisceau optique (5) émis par la source (4) et reçu par le réflecteur axial ($10_1$) du support tournant (9).

7°) Dispositif conforme à la revendication 1, caractérisé en ce que le moyen produisant, à chaque rotation du faisceau, le signal référençant l'origine de la rotation, est situé de manière produire ce

17

signal ($S_1$) lorsque le faisceau optique tournant ($5_1$) se trouve au point haut de sa trajectoire.

8°) Dispositif conforme à la revendication 1, caractérisé en ce que l'ensemble électronique recevant le signal de référence ($S_1$) et le signal ($S_2$) fonction de la durée d'interruption du faisceau tournant ($5_1$) comprend, un dispositif de verrouillage de phase (42) produisant, à partir du signal ($S_1$) de référence d'origine, un signal ($S_n$) dont la fréquence est n fois supérieur à la vitesse de rotation du faisceau optique ($5_1$), un compteur à incrémentation (43) recevant les signaux ($S_n$) provenant du dispositif de verrouillage de phase (42), ce compteur étant remis à zéro par le signal de référence d'origine ($S_1$), un dispositif de traitement informatique (44) recevant le signal de référence d'origine ($S_1$), du faisceau tournant, le signal ($S_2$) fonction de la durée d'interruption de ce faisceau tournant et les signaux ($S_n$) provenant du compteur d'incrémentation (43), ce dispositif de traitement informatique comportant un comparateur pour comparer les données mesurées à celles mises initialement en mémoire.

9°) Dispositif conforme à la revendication 1, caractérisé en ce que les moyens de l'émetteur pour entraîner en rotation le faisceau se composant d'un prisme (53) entraîné en rotation et disposé sur la trajectoire du faisceau pour le dévier angulairement suivant une trajectoire circulaire et d'une lentille circulaire (51) dont le foyer est situé sur le prisme (53) afin que le faisceau émergeant se déplace parallèlement à son axe suivant cette trajectoire circulaire.

10°) Dispositif conforme à la revendication 9, caractérisé en ce que le récepteur du faisceau comprend une lentille circulaire (67) recevant le faisceau tournant parallèlement à son axe issu de l'émetteur, cette lentille déviant le faisceau vers son

0223636

foyer où est situé un moyen (69) collecteur du flux lumineux.

11°) Dispositif conforme à la revendication 9, caractérisé en ce que le moyen pour produire à chaque rotation du faisceau, un signal ($S_1$) référençant une origine de la rotation de ce faisceau, est constitué par un moyen capteur (70) prévu sur l'émetteur pour capter une fraction du faisceau réfléchi par la lentille (51) en un point de la trajectoire circulaire du faisceau venant frapper cette lentille.

12°) Dispositif conforme à la revendication 9, caractérisé en ce que le moyen émetteur comprend un double prisme (61) renvoyant le faisceau issu de la source lumineuse (60) parallèlement et en direction opposée vers le prisme tournant (53).

13°) Dispositif conforme aux revendications 9 ou 10, caractérisé en ce que les lentilles circulaires (51, 67) de l'émetteur et/ou du récepteur, sont des lentilles sphériques.

0223636

1/4

# FIG.1

# FIG.2

FIG. 3

FIG. 4

FIG. 5

FIG.6

FIG.8

FIG.7

0223636

4/4

FIG.10

FIG.9

# RAPPORT DE RECHERCHE EUROPEENNE

**Office européen des brevets**

Numero de la demande

EP 86 40 2135

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| A | BBC-NACHRICHTEN, vol. 62, no. 5, 1980, pages 168-172, Manheim, DE; D. NIKOLAJ: "Optoelektronisches Mess- und Sensorsystem" * Figure 4; page 170, ligne 15 - page 171, colonne de milieu, dernière ligne * | 1 | G 06 K 9/50 |
| | ----- | | |
| | | | **DOMAINES TECHNIQUES RECHERCHES (Int. Cl.4)** |
| | | | G 06 K 9/00 |

Le present rapport de recherche a été établi pour toutes les revendications

| Lieu de la recherche | Date d'achevement de la recherche | Examinateur |
|---|---|---|
| LA HAYE | 09-01-1987 | SONIUS M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe à la base de l'invention
E : document de brevet anterieur, mais publie a la date de dépôt ou apres cette date
D : cité dans la demande
L : cité pour d'autres raisons

& : membre de la même famille, document correspondant

OEB Form 1503 03 82